# EUROPEAN PATENT APPLICATION

(11) **EP 4 362 358 A1**
(43) Date of publication of application: **01.05.2024**
(21) Application number: 22203635.2
(22) Date of filing: 25.10.2022
(51) Int. Cl.: H04B 17/17, H04B 17/29, G06F 11/36

(54) **METHODS AND SYSTEMS FOR TESTING A SYSTEM**

(71) Applicant: Aptiv Technologies AG, 8200 Schaffhausen (CH)
(72) Inventor: Wójciaczyk, Radoslaw, 30-404 Kraków (PL)
(74) Representative: Manitz Finsterwald Patent- und Rechtsanwaltspartnerschaft mbB

(57) **Abstract**

A computer implemented method for testing a system may include: determining one or more test cases for testing the system, each of the one or more test cases comprising at least one test step; for each of the one or more test cases, carrying out the steps of: executing each of the at least one test step of the respective test case; collecting data generated during and/or after the execution of the at least one test step of the respective test case; and based on a characteristic of the respective test step: evaluating the collected data and setting a status for the at least one test step of the respective test case to passed or failed based on the collected data, or recording the collected data and setting the status for the at least one test step of the respective test case to postponed.

## Description

### FIELD

The present disclosure relates to methods and systems for testing a system.

### BACKGROUND

Methods for testing a system can be performed, for example, by software products that may allow definition of tests, execution of the tests, and handling of test results.

A definition of the tests may be based on what type of input is provided, what type of checks should be done, and what may be a correct sequence of the tests. The execution of a single test may be fully automatic or manual. After executing each single test, an evaluation of each single test may be necessary to decide how to handle the test result.

Usually, the sequence of tests or a framework of tests are designed with a software design mindset. Therefore, every single step of a test has to be evaluated at the time of processing, which may cause some problems. For example, a human tester has to be constantly present at a test bench for tests where a human judgement is needed. A lack of feedback of the human tester may interrupt or stop the evaluation of the test and thus the testing process. Also, if computationally intensive verifications are required for a single test, for example when a significant amount of time is needed to evaluate the test, this may cause a prolongation of the entire sequence of tests.

Accordingly, there is a need for methods and systems that improve testing of a system, particularly without interrupting a sequence of tests.

### SUMMARY

The present disclosure provides a computer implemented method, a computer system, a test arrangement and a non-transitory computer readable medium according to the independent claims. Embodiments are given in the subclaims, the description and the drawings.

In one aspect, the present disclosure is directed at a computer implemented method for testing a system, wherein the method comprises the following steps carried out by computer hardware components: determining one or more test cases for testing the system, each of the one or more test cases comprising at least one test step; for each of the one or more test cases, carrying out the steps of: executing each of the at least one test step of the respective test case; collecting data generated during and/or after the execution of the at least one test step of the respective test case; and based on a characteristic of the respective test step: evaluating the collected data and setting a status for the at least one test step of the respective test case to passed or failed based on the collected data, or recording the collected data and setting the status for the at least one test step of the respective test case to postponed.

In other words, the computer implemented method described herein may enable a separation of an evaluation of a test step of a respective test case from an execution of the test step of the respective test case. Thus, the evaluation of the test step may be performed later than the execution of the test step or even after execution of a subsequent test step. For each of the test steps that may be evaluated at a later point of time, a status of each of the respective test step may be set to postponed. A decision if a test step of the respective test case may be evaluated at a later point of time or if the test step of the respective test case may be evaluated at (or directly after) the time of execution may be determined based on a characteristic or based on an identifier of the respective test step.

The system may be, for example, a car radio or an electric unit of a car radio. A car radio may be understood as a device for receiving radio broadcasts of, for example, music, news, or radio drama, for example from a radio station. The car radio may also be equipped to receive audio data for playback via a cable or via a local radio connection, for example Bluetooth. A test case for testing the car radio may comprise the following test steps. A first test step may be turning on the car radio. This test step may be a precondition for testing the car radio and may not have a test result or there may be no status for this test step. This test step may be performed or carried out automatically by a computer system or manually by a human operator. Data, for example, current consumption and/or signs of system activity like logs in a system console may be generated and collected during and/or after the execution of this test step. An evaluation based on this data may be performed. The evaluation may comprise a comparison of the current consumption during the execution of the test step with a threshold value of a current consumption that may be required to turn on the car radio. Alternatively or additionally, the evaluation may comprise a comparison of the current consumption during or after the execution of the test step with a threshold value of a current consumption that is required for operating the car radio (in an on state). Additionally or alternatively, the evaluation may comprise a determination of whether there has been a system activity during the execution of the test step, for example, the determination of a log for activating a power switch of the car radio. If it is determined that turning on the car radio was possible, for example if the current consumption during the execution of the test step is greater than or equal to the threshold value required to turn on the car radio and/or if the log for activating a power switch of the car radio has been determined, a status of the test step may be set to "passed". Otherwise, if it is determined that the car radio could not be turned on, for example if the current consumption during the execution of the test step is lower than the threshold value required to turn on the car radio and/or if the log for activating a power switch of the car radio has not been determined, the status of this test step may be set to "failed".

Setting the status of the test step may be done automatically by the computer system or manually by the human operator.

A next test step of the test case may be tuning to a station X. As described above for the first test step, also the test step of tuning to a station X may be a precondition for testing the car radio. This test step may also be performed or carried out automatically by the computer system or manually by the human operator. If, for example, a graphical user interface (GUI) may be used to tune the car radio to the station X, images of the GUI may be collected during and/or after the execution of the test step. The images of the GUI may be captured by a camera located near the system (for example in front of the system) and in line of sight of the system or in line of sight of the GUI of the system. The images may also be collected by the system itself, for example, by capturing screenshots of the GUI. Additionally or alternatively, a software application programming interface (API) may be used to collect appropriate data for evaluation whether the car radio has been tuned to the station X. The evaluation whether the car radio has been tuned to station X may be performed based on the collected images, either captured by the camera and/or recorded by the system, using appropriate image recognition methods, for example, a neural network. Additionally or alternatively, if the collected data may be appropriate data of the system API, the evaluation may comprise a determination whether the appropriate data indicates that the car radio has been tuned to station X. If it is determined that tuning the car radio to the station X was possible, for example if the image recognition method determines that a human being has switched the car radio to station X, for example by pressing a button where a frequency of the station X has been store, or if a visual indication of the frequency of station X is determined in the images and/or if the data of the software API indicates that the car radio has been tuned to station X, a status of the test step may be set to "passed". Otherwise, if it is determined that tuning the car radio to the station X failed, for example if the image recognition method does not determine the visual indication of the frequency of the station X in the images and/or the data of the software API does not indicate that the car radio has been tuned to station X, the status of this test step may be set to "failed". Setting the status of the test step may be done automatically by the computer system or manually by the human operator.

A further test step may be to check if the name of the station X may be displayed correctly on the car radio. For example, the correct name of the station X may be Y. This test step may be performed or carried out automatically by the computer system or manually by the human operator. The collected data of this test step may also be captured images of the GUI or appropriate software data as described in the previous test step. Also, the evaluation of the collected data may be performed by image recognition methods and/or by evaluating the data of the software API. If it is determined that the name Y of the station X is correctly displayed on the car radio, for example if a comparison of a station name determined by the image recognition method and the correct name Y of the station matches, a status of this test step may be set to "passed". Otherwise, if the name of the station X is displayed on the car radio incorrect, for example if a comparison of a station name determined by the image recognition method and the correct name Y of the station are different, or if the name of the station X is not displayed at all on the car radio, the status of this test step may be set to "failed". Setting the status of the test step may be done automatically by the computer system or manually by the human operator.

A final test step of the test case may be to check if an audio signal of the station X is played on the car radio without disruptions. The collected data generated during and/or after the execution of this test step may be the audio signal of the station X. A characteristic of this test step may indicate that there is no human operator available for evaluating this test step immediately. Thus, the collected data (for example the audio signal of the station X) may be recorded for a certain period of time and a status for this test step may be set to "postponed", indicating a later evaluation of this test step by a human operator when available or automatically by the computer system. An evaluation of this final test step by the human operator may be performed by replaying the recorded collected data such that the human operator may be capable to identify whether, in his opinion, the replayed audio signal is of sufficient quality or not. An automatic evaluation of this final test step by the computer system may be performed using artificial intelligence (AI) based methods, wherein the AI based methods may be able to determine errors or interferences in the recorded audio signal. If it is determined by the human operator or by the computer system that the audio signal of the station X is played on the car radio without disruptions, a status of this final test step may be set to "passed". Otherwise, if it is determined by the human operator or by the computer system that the audio signal of the station X is played on the car radio with disruptions, the status of this test step may be set to "failed". Setting the status of the test step may be done automatically by the computer system or manually by the human operator.

A system under test may be any kind of system whose status may be recordable. For example, switch states or signals may describe the status of the system. Testing the system may mean to elaborate if a functionality of the system may be as expected, for example, if the system may have an expected output based on a predefined input. A test case may comprise at least one test step. If the test case may comprise more than one test step, the at least two test steps or a plurality of test steps may be a sequence of test steps (in other words: sequential steps). The at least one test step or the plurality of test steps may be used to carry out (in other words: perform) one test case. Thus, one test step may be executed after another test step in order to execute the entire test case. Each of the test steps may describe an execution step of the test case. A status of each test step may be set to passed or failed after execution of each of the test steps. In other words, each test step may be marked as passed or failed after execution of the test step (for example once the test step has been evaluated). For example, the status of a test step may be set based on a comparison between a result of the test step and an expected result of the test step. If each test step of the respective test case is marked as passed, then the entire respective test case may be marked as passed. If, however, at least one of the test steps of the respective test case may be marked as failed, then the entire respective test case may be marked as failed. A test procedure may comprise a plurality of test cases (in other words: a set of test cases) in an execution order. The test procedure may comprise any associated actions that may be required to set up the (initial) preconditions for the plurality of test cases and/or any wrap up activities after execution of the plurality of test cases. The system may pass a test if the status of all test steps and therefore the status of all respective test cases may be set to passed. Otherwise, the system may fail the test.

The collected data may be any appropriate data that may describe a state of the system before, during and/or after execution of a test step. The characteristic of the respective test step may be an identifier or a flag that may indicate a condition. The condition may be independent of the state of the system.

According to an embodiment, the method may further comprise the following steps carried out by the computer hardware components: for each of the one or more test cases, carrying out the steps of: for each of the at least one test step of the respective test case, if the status of the respective test step is set to postponed: retrieving the respective recorded collected data; and setting the status for the respective test step to passed or failed based on the retrieved recorded collected data. The respective recorded collected data of the respective test step may be a state of the system recorded at a time before, during and/or after an execution of the respective test step. The respective recorded collected data may comprise signals, flags, states of switches, or the like of the system. A human operator (in other words: a human tester) or an algorithm may be able to set the status of the respective test step to passed or failed based on the retrieved recorded collected data of the respective test step. The status of a postponed test step, i.e. a test step with a later evaluation, may be set to passed or failed based on a comparison between a result of the postponed test step and an expected result of the postponed test step. The result of the postponed test step and the expected result of the postponed test step may be a state of the system or a response of the system to predetermined input data, wherein the predetermined input data may comprise signals, flags and/or states of switches of the system.

According to an embodiment, the step of evaluating the collected data for the at least one test step of the respective test case may be carried out or may be performed using an image recognition method, for example an appropriate artificial intelligence method. The collected data may comprise images of a graphical user interface. The collected data or the images may be input to the image recognition method. The image recognition method may be based on a neural network. The neural network may comprise a plurality of convolutional and/or pooling layers.

According to an embodiment, the method may further comprise the following step carried out by the computer hardware components: setting the status for the one or more test cases to postponed if the status of one or more test steps of the one or more test cases is set to postponed. In other words, if the status of each of the test steps of a test case may be set to passed, the status of the test case comprising each of the test steps may be set to passed. Similarly, if the status of at least one of the test steps of the test case is (or has been) set to failed, the status of the test case comprising the at least one test step is set to failed.

According to an embodiment, the method may further comprise the following steps carried out by the computer hardware components: filtering the one or more test cases for which the status is set to postponed and/or filtering the one or more test steps of the one or more test cases for which the status is set to postponed. The one or more test cases may comprise the one or more respective test steps. For each of the one or more test steps, a status of the one or more test steps may be set to passed, failed or postponed. If the status of each of the test steps of a respective test case is set to postponed, then the status of the test case comprising the postponed test steps may be set to postponed. For a later evaluation of each of the one or more test cases for which the status is set to postponed, the one or more test cases for which the status is set to postponed may be filtered out of a plurality of test cases comprising test cases for which a status is set to passed, failed or postponed. For a later evaluation of each of the one or more test steps for which the status is set to postponed, the one or more test steps for which the status is set to postponed may be filtered out of a plurality of test steps comprising test steps for which a status is set to passed, failed or postponed. The filtered one or more test cases for which the status is set to postponed or the filtered one or more test steps for which the status is set to postponed may be selected and presented to a human operator or a human tester for evaluation.

According to an embodiment, the characteristic of the respective test step may indicate an availability of a human operator to provide input for evaluating the collected data. The availability of a human operator may be identified by a flag or a signal of the system that may be set by the human operator. For example, the human operator may set the flag or the signal of the system by pressing a button or typing a confirmation of his availability for the evaluation of the respective test step. The availability of a human operator may also be detected automatically. For example, a camera capturing an environment in front of a test arrangement may detect whether a human operator is available to evaluate the respective test step. The characteristic of the respective test step may be set automatically based on a detection whether there is a human operator available or not.

According to an embodiment, the step of evaluating the collected data and setting the status for the at least one respective test step to passed or failed based on the collected data may be carried out if the characteristic of the respective test step indicates that the human operator is available to provide input for evaluating the collected data. In other words, if a human operator is available to provide input for evaluating the collected data, the evaluation of the collected data may be performed directly by the human operator. The term "directly" may mean that the evaluation of the collected data may be performed by the human operator at a time (or immediately after a time) when executing a respective test step for which the data is collected. Thus, the human operator may set the status of the at least one respective test step to passed or failed based on his evaluation of the collected data (for example without intermediary recording of the collected data for a later evaluation). The status of the at least one respective test step may not be set to postponed in this case.

According to an embodiment, the step of recording the collected data and setting the status for the at least one respective test step to postponed is carried out if the characteristic of the respective test step indicates that the human operator is not available to provide input for evaluating the collected data. In other words, if there is no human operator available to provide input for evaluating the collected data directly, the collected data or the respective test step may not be evaluated directly. Instead, the collected data may be stored or recorded for a later evaluation of the respective test step.

According to an embodiment, the method may further comprise the following steps carried out by the computer hardware components: presenting the filtered one or more test cases to a human operator for evaluation and/or presenting the filtered one or more test steps to a human operator for evaluation. The filtered one or more test cases and/or the filtered one or more test steps may be presented to a human operator on a graphical user interface of a test arrangement. The graphical user interface may be a display of a computer system that may comprise a plurality of computer hardware components configured to carry out steps of the computer implemented method described herein. The presented filtered one or more test steps may comprise all necessary data of the system the human operator may need to evaluate the presented filtered one or more test steps. Particularly, the presented filtered one or more test steps may comprise the collected data of the system generated during and/or after the execution of the at least one test step. The human operator may select one of the presented filtered one or more test cases and may evaluate each of the presented filtered one or more test steps of the selected test case. After the human operator may have evaluated each of the presented filtered one or more test steps of the selected test case, the selected test case may be evaluated by setting the status of the selected test case to passed or failed.

According to an embodiment, the characteristic of the respective test step may indicate a computational effort for evaluating the collected data of the at least one respective test step. The computational effort may be a time that a software function may need for evaluating the collected data if the evaluation is performed in a fully automatic mode or in a semiautomatic mode. The computational effort may be predicted or measured automatically during usage and development of a test case using an appropriate method. The computational effort may be estimated based on previous experience for similar test steps. For example, if a computational effort of a similar test step of another test case has been measured, then the characteristic of the respective test case may indicate the same computational effort.

According to an embodiment, the step of evaluating the collected data and setting the status for the at least one respective test step to passed or failed based on the collected data may be carried out if the characteristic of the respective test step indicates that the computational effort for evaluating the collected data of the at least one respective test step is lower than or equal to a first threshold. The first threshold may be predetermined for each test step of a test case or for at least the test case by a human operator when defining the test case.

According to an embodiment, the step of recording the collected data and setting the status for the at least one respective test step to postponed may be carried out if the characteristic of the respective test step indicates that the computational effort for evaluating the collected data of the at least one respective test step is higher than a second threshold. The second threshold may be predetermined for each test step of a test case or for at least the test case by a human operator when defining the test case.

According to an embodiment, the collected data may be a state of the system. The state of the system may describe the system in terms of a system behavior. The system behavior may comprise a plurality of states or signals of the system. The plurality of states of the system may comprise for example, states of transistors or switches of the system. The plurality of signals of the system may comprise, for example electronic signals transmitted over communication channels like a controller area network (CAN) bus of the system.

In another aspect, the present disclosure is directed at a computer system, said computer system being configured to carry out several or all steps of the computer implemented method described herein. The computer system may be part of a test arrangement for testing a system described herein.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a test arrangement, comprising the computer system described herein and the system. The test arrangement may be configured for testing the system. The test arrangement may comprise a plurality of modules and/or units to perform several or all steps or aspects of the computer implemented methods described herein.

In another aspect, the present disclosure is directed at a non-transitory computer readable medium comprising instructions which, when executed by a computer, cause the computer to carry out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure may also be directed at a computer program for instructing a computer to perform several or all steps or aspects of the computer implemented methods described herein.

It is understood that features described in connection with the methods can be realized in the computer system as well as the non-transitory computer readable medium and vice versa.

### DRAWINGS

Exemplary embodiments and functions of the present disclosure are described herein in conjunction with the following drawings, showing schematically:
- Fig. 1: a flow diagram illustrating a method for evaluating a test step of a test case according to various embodiments;
- Fig. 2: a flow diagram illustrating a method for testing a system according to various embodiments; and
- Fig. 3: a computer system with a plurality of computer hardware components configured to carry out steps of a computer implemented method for testing a system according to various embodiments.

### DETAILED DESCRIPTION

Testing a system may include checking a consistency of system operations under a test, or in other words, a test case. A test case may be a set of preconditions, inputs, actions (where applicable), expected results and/or postconditions that may be predefined. These parameters may be developed based on test conditions. A test condition may be an item or an event of a component or of a system that may be verified by one or more test cases, e.g. a function, a transaction, a feature, a quality attribute, or a structural element. For example, a test condition for a car radio may be that the car radio is capable to tune to a station, display the name of the station properly and play audio without disruption.

A test case may be used for checking consistency of system operation under this test case. A possible definition of a test case may be based on a table definition or a list definition, wherein the test case may include a plurality of single steps (in other words: test steps) that may be executed one after another in a prescribed order. Another possibility to define a test case may be a graphical definition of the test case, wherein a sequence diagram or a state diagram may be used for defining the test steps. The graphical definition of a test case may be advantageous for evaluation of complex parallel events that may occur within a system. In both cases, the table/list definition or the graphical definition, the idea may be to describe (in the form of a list or a graph) what type of inputs may be provided and what type of checks may be done, thus, what may be a correct sequence of the test steps.

Once a test case has been defined, an evaluation of the test case and thus, also an evaluation of each of the test steps of the test case may be performed. The evaluation of the test case may include an execution of the test case and an execution of all related test steps, i.e. each of the test steps of the test case. The execution and/or the evaluation of a test case may be performed in a fully automatic mode, in a fully manual mode or in a semiautomatic mode. In the fully automatic mode, all inputs may be set automatically and all evaluations (in other words: checks) may be done automatically. In fully automatic mode or in semiautomatic mode, there may be a software function called once a test step is executed. The software function may be able to evaluate the test step and/or the test case and/or to set a status for the test step and/or test case. The software function may also be able to store or record data of the system and/or provide a test result of a test step or a test case to a human operator. The test result of a test step or the test result of a test case may be called a verdict. In the fully manual mode, all inputs may be set manually and all evaluations or checks may be done manually. In the semiautomatic mode or in a mixed mode, some inputs may be set manually and some evaluations may be done manually, whereas some other inputs may be set automatically and some other evaluations may be done automatically.

An application of the semiautomatic mode or mixed mode for executing and/or evaluating of test cases may be related to the fact that a human being or a human tester may be capable to precisely judge a system behavior, for example, seeing glitches etc. that may not be easily spotted by even sophisticated artificial intelligence (AI) systems. In the semiautomatic mode or mixed mode, human inputs may usually be obtained by popups that may ask a human tester (in other words: a test person or a human operator) to provide a test result. This may mean that the human tester may set the test result or the status of the test step to "passed" or "failed".

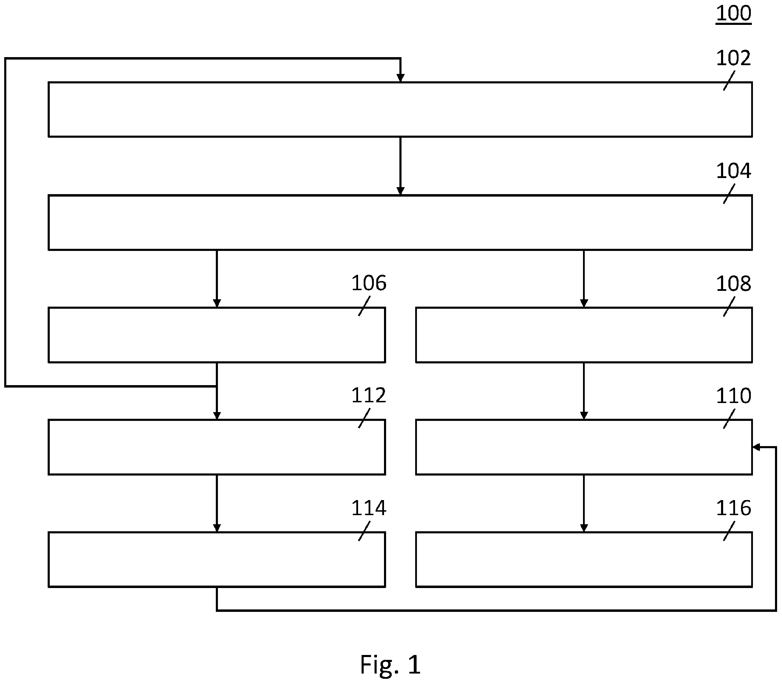

Fig. 1 shows a flow diagram 100 illustrating a method for evaluating a test step of a test case according to various embodiments. It will be understood that the described method for evaluating one test step of one test case may be valid also for a plurality of test steps of a test case and also for a plurality of test cases by executing the method described in Fig. 1 sequentially for each of the one or more test steps of the one or more test cases.

At step 102, a test step of the test case may be executed. At step 104, a behavior of the system under test may be collected. The behavior of the system may be described by the collected data generated during and/or after the execution 102 of the test step. The collected data may be a state of the system. For example, the collected data may include a state of components of the system and/or values of signals of the system. The components may be (electronic) switches or the like, and the signals may be a data signal or a flag. The collected data may also comprise audio data and/or video data for a later evaluation of the system by a human operator. The further process of evaluating the test step may depend on a characteristic of the test step. Based on the characteristic of the test step, either the collected data may be recorded, at step 106, for a postponed evaluation of the test step, or an evaluation, at step 108, of the collected data may be performed (in other words: carried out) directly.

The characteristic of the test step may indicate whether or not a human tester is available to provide input for the evaluation of the collected data. Alternatively, the characteristic of the respective test step may indicate whether or not a computational effort for performing (in other words: carrying out) the evaluation of the respective test step or for performing (in other words: carrying out) an evaluation of the collected data is high or low. It may also be possible that the characteristic of the respective test step may be predetermined, for example, by a human operator who may define the test case. Thus, based on the characteristic of the test step, not every evaluation of a test step has to be performed at (or directly after) the time of executing the test step. Since not every evaluation may have to be finalized at the time of execution, the evaluation may be postponed and thus, savings in an execution time of test steps and a simplification in evaluation of complex system behavior may be achieved.

Therefore, the methods and systems described herein may support a delayed type of test steps of a test case, i.e. postponing an evaluation of test steps and thus, postponing an evaluation of test results of a test case.

If the characteristic of the test step indicates that there is no human tester available to provide input for the evaluation of the collected data, or if the characteristic of the test step indicates that there is a high computational effort needed for evaluating the collected data, the evaluation of the test step may continue at step 106. Also, if the characteristic of the test step is predetermined in that the evaluation of the test step may be postponed, the evaluation of the test step may continue at step 106. Thus, the collected data may be recorded, at step 106, for a postponed evaluation of the test step. The characteristic of the test step may indicate that the computational effort for performing (in other words: carrying out) the evaluation of the collected data of the respective test is high, if the computational effort is higher than a threshold. The threshold may be defined by a human operator.

Otherwise, if the characteristic of the test step indicates that there is a human tester available to provide input for the evaluation of the collected data, or if the characteristic of the test step indicates that there is a low computational effort needed for evaluating the collected data, the evaluation of the test step may continue at step 108. Thus, the evaluation of the collected data may be performed directly. Also, if the characteristic of the test step is predetermined in that the evaluation of the test step may be performed directly, the evaluation of the test step may continue at step 108. The characteristic of the test step may indicate that the computational effort for performing (in other words: carrying out) the evaluation of the collected data of the respective test is low, if the computational effort is lower than or equal to a threshold. The threshold for determining if the computational effort is high and the threshold for determining if the computational effort is low may be the same threshold or may be different thresholds. The same threshold or the different thresholds may be defined by a human operator.

At step 108, if the evaluation of the collected data of the test step may be performed or carried out directly, a status for the test step may be set to passed or failed based on the collected data. The status of the test step may be marked or set to passed if a result of the test step is equivalent to an expected result for this test step based on the collected data of the test step. Any equivalent formulation that may indicate that the result of the test step is as expected may also be possible. However, if the result of the test step is not equivalent to an expected result for this test step, the status of the test step may be marked or set to failed. Any equivalent formulation that may indicate that the result of the test step is not as expected may also be possible. After setting the status for the test step to passed or failed, the method may proceed at step 110. At step 110, the result of the test step and the status of the test step may be stored in the system, for example, for a later analysis of a user.

At step 106, the collected data of the test step may be recorded and the status for the test step may be set to postponed. After recording the collected data and setting the status for the test step to postponed, the method may return to step 102 and executing a further test step of the test case. Or, if the test step may be a last test step of the test case, the method may continue at step 112. At step 112, the one or more test steps for which the status has been set to postponed may be filtered. Filtering the one or more test steps for which the status has been set to postponed may include searching and selecting the one or more test steps for which the status may be set to postponed in a plurality of test steps of the test case. After filtering the one or more test steps for which the status has been set to postponed, the method may continue at step 114.

At step 114, for each of the filtered test steps, the recorded collected data, for example a status of the system at an execution time of the respective test step, may be retrieved. Furthermore, a status for each of the filtered test steps may be set to passed or failed based on the retrieved recorded collected data. In other words, stored data of the system at a time when executing the respective test step may be retrieved for evaluating the respective test step. The retrieved recorded collected data may be presented to a human tester, for example on a display of a monitor. After setting the status for each of the filtered test steps to passed or failed, the method may proceed at step 110. At step 110, the result of each of the filtered test steps and the status of each of the filtered test steps may be stored in the system, for example, for a later analysis of a user.

After the results of each test step, which may include the results of each of the test steps that may be evaluated directly and the results of each of the filtered test steps, may be stored in the system, the method may continue at step 116.

At step 116, a final result for the test case including all test steps may be evaluated based on the result of the test steps. The final result for the test case may be stored in the system. Thus, the final result may be available for a user, for example for further future analysis. A status of the test case may be set to postponed if the status of one or more test steps of the test case is (still) set to postponed.

One embodiment of the systems and methods described herein for postponing an evaluation of a test step may be that the characteristic of the test step indicates that a human tester is not available to provide a required input for evaluating the test step. This may be the case if an execution and/or an evaluation of a test case or a test step is performed in a fully manual mode or in a semiautomatic mode where at least for the evaluation of some test steps manual input from a human tester is needed. Instead of stopping or interrupting the evaluation of the test case or the test step, as may usually happen if there is no human tester available, a status of the test step and so a status of the entire test case may be set to postponed (or something equivalent) for later evaluation. Test cases and/or test steps for which the status is set to postponed may be searched, filtered and selected using an application programing interface (API) and may be presented to and evaluated by human operator(s) or human tester(s) in suitable time. Thus, an evaluation of test results for test steps and test cases may be in parallel to ongoing test execution.

As described herein, a test framework or a method of testing a system for this embodiment may work as follows. If the characteristic of a test step may indicate that a human feedback may be required, data of the system, for example a state of the system may be recorded. The test step and so the entire test case may be marked for later evaluation in that the status of the test step and thus, the status of the entire test case may be set to postponed. At a suitable time, for example when a human operator is available to evaluate the test step or the test case for which the status is set to postponed, a list of all searched and filtered test steps or test cases for which the status was set to postponed may be presented to the human operator. Thus, the human operator may get a backlog of all postponed test steps or test cases for his evaluation. The test steps and test cases for his evaluation may be presented to the human operator in an easy to understand way with all results and data ready for his judgement. The evaluation may be done by the human operator or the evaluation may further be postponed by setting the status of the test step or of the test case again to postponed.

As an effect, operating times of a test arrangement may be extended and test case results may be evaluated independently of a test execution. Evaluation of test steps or test cases may be done at a time convenient for a human operator. Thus, work may be planned in a better way. Due to postponing evaluations of test steps and test cases that may not be evaluated directly instead of interrupting the evaluation of the test steps and test cases, significant time savings and a simplification of evaluations of test steps and test cases when testing a system may be achieved.

Another embodiment of the systems and methods described herein for postponing an evaluation of a test step may be that the characteristic of the test step indicates that intensive or high computational effort may be needed to evaluate a test step or a test case. The indication if an intensive or high computational effort may be needed may be determined using a threshold, or may be predicted or measured automatically during usage and development of a test case using an appropriate method, or may be set manually by a human operator. If the characteristic of the test step may indicate a high computational effort for the test step, a status of the test step and so a status of the entire test case may be set to postponed (or something equivalent). Test cases and/or test steps for which the status is set to postponed may be searched, filtered and/or selected using an application programing interface (API).

As described herein, a test framework or a method of testing a system for this embodiment may work as follows. If the characteristic of a test step may indicate that high computational effort may be needed to evaluate the test step, data of the system, for example a state of the system may be recorded. The test step and so the entire test case may be marked for later evaluation in that the status of the test step and thus, the status of the entire test case may be set to postponed. An API may allow that the postponed test case and/or the postponed test steps may be searched, obtained and evaluated.

As an effect, computationally intensive operations may be performed in parallel with test execution or after test execution, i.e. the evaluation of test results of a test step or a test case may be performed in parallel to ongoing test execution. Therefore, test execution may not be paused for this operation and therefore may be shorter.

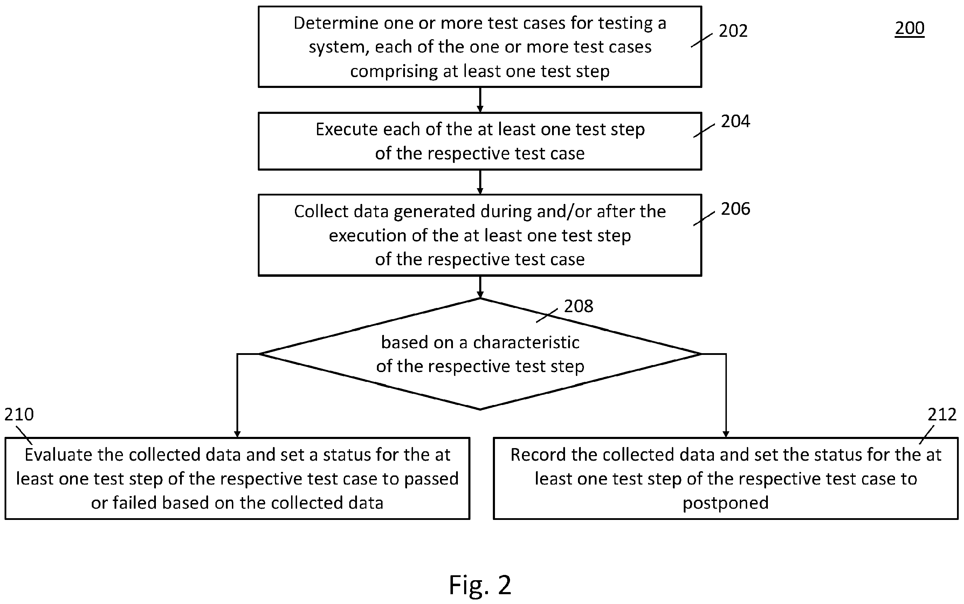

Fig. 2 shows a flow diagram 200 illustrating a method for testing a system according to various embodiments. At 202, one or more test cases for testing the system may be determined, each of the one or more test cases including at least one test step. At 204, each of the at least one test step of the respective test case may be executed. At 206, data generated during and/or after the execution of the at least one test step of the respective test case may be collected. At 208, a decision based on a characteristic of the respective test step may be made, whether, at 210, the collected data may be evaluated and a status for the at least one test step of the respective test case may be set to passed or failed based on the collected data, or, at 212, the collected data may be recorded and the status for the at least one test step of the respective test case may be set to postponed .

According to an embodiment, the method may further include the following steps carried out by the computer hardware components: for each of the one or more test cases, carrying out the steps of: for each of the at least one test step of the respective test case, if the status of the respective test step is set to postponed: retrieving the respective recorded collected data; and setting the status for the respective test to passed or failed based on the retrieved recorded collected data.

According to an embodiment, the method may further include the following step carried out by the computer hardware components: setting the status for the one or more test cases to postponed if the status of one or more test steps of the one or more test cases is set to postponed.

According to an embodiment, the method may further include the following step carried out by the computer hardware components: filtering the one or more test cases for which the status is set to postponed, and/or filtering the one or more test steps of the one or more test cases for which the status is set to postponed.

According to an embodiment, the characteristic of the respective test step indicates an availability of a human operator to provide input for evaluating the collected data.

According to an embodiment, the step of carrying out the evaluation of the collected data and setting the status for the at least one respective test step to passed or failed based on the collected data is carried out if the characteristic of the respective test step indicates that the human operator is available to provide input for evaluating the collected data.

According to an embodiment, the step of recording the collected data and setting the status for the at least one respective test step to postponed is carried out if the characteristic of the respective test step indicates that the human operator is not available to provide input for evaluating the collected data.

According to an embodiment, the method may further include the following step carried out by the computer hardware components: presenting the filtered one or more test cases to a human operator for evaluation, and/or presenting the filtered one or more test steps to a human operator for evaluation.

According to an embodiment, the characteristic of the respective test step indicates a computational effort for carrying out the evaluation of the collected data of the at least one respective test step.

According to an embodiment, the step of carrying out the evaluation of the collected data and setting the status for the at least one respective test step to passed or failed based on the collected data is carried out if the characteristic of the respective test step indicates that the computational effort for carrying out the evaluation of the collected data of the at least one respective test step is lower than or equal to a first threshold.

According to an embodiment, the step of recording the collected data and setting the status for the at least one respective test step to postponed is carried out if the characteristic of the respective test step indicates that the computational effort for carrying out the evaluation of the collected data of the at least one respective test step is higher than a second threshold.

According to an embodiment, the collected data is a state of the system.

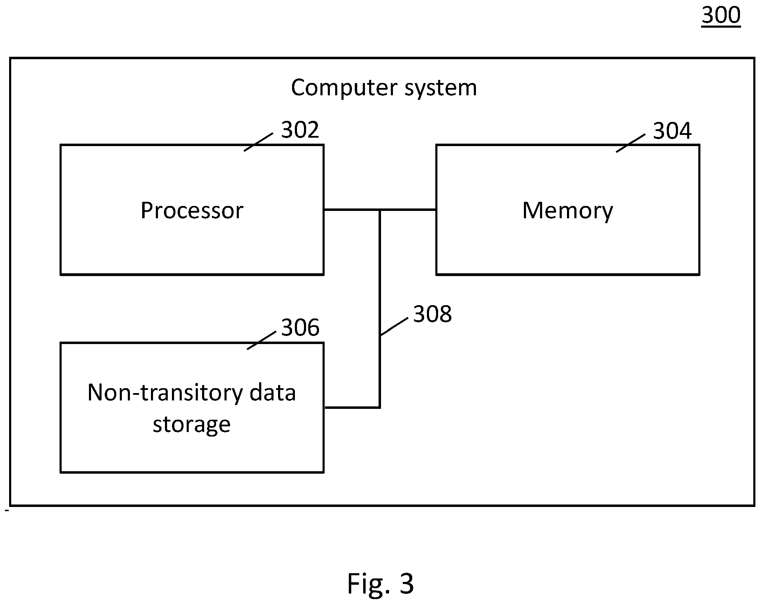

Each of the steps 202, 204, 206, 208, 210, 212 and the further steps described above may be performed by computer hardware components, for example as described with reference to Fig. 3.

Fig. 3 shows a computer system 300 with a plurality of computer hardware components configured to carry out steps of a computer implemented method for testing a system according to various embodiments. The computer system 300 may include a processor 302, a memory 304, and a non-transitory data storage 306.

The processor 302 may carry out instructions provided in the memory 304. The non-transitory data storage 306 may store a computer program, including the instructions that may be transferred to the memory 304 and then executed by the processor 302.

The processor 302, the memory 304, and the non-transitory data storage 306 may be coupled with each other, e.g. via an electrical connection 308, such as e.g. a cable or a computer bus or via any other suitable electrical connection to exchange electrical signals.

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 300.

### Reference numeral list

- 100: flow diagram illustrating method steps for evaluating a test step of a test case
- 102: executing a test step of the test case
- 104: collecting data generated during and/or after execution of a test step
- 106: recording collected data and setting a status to postponed
- 108: evaluating collected data and setting a status to passed or failed
- 110: storing a result and the status of the test step or for the test case
- 112: filtering test steps or test cases
- 114: retrieving the recorded collected data and setting a status to passed or failed
- 116: storing a final result of the test case

- 200: flow diagram illustrating a method for testing a system according to various embodiments
- 202: step of determining one or more test cases for testing the system
- 204: step of executing each of the at least one test step of the respective test case
- 206: step of collecting data generated during and/or after the execution of the at least one test step of the respective test case
- 208: decision step based on a characteristic of the respective test step
- 210: step of evaluating the collected data and setting a status for the at least one test step of the respective test case to passed or failed based on the collected data
- 212: step of recording the collected data and setting the status for the at least one test step of the respective test case to postponed
- 300: computer system according to various embodiments
- 302: processor
- 304: memory
- 306: non-transitory data storage
- 308: connection

## Claims

1. Computer implemented method for testing a system (202), the method comprising the following steps carried out by computer hardware components:
- determining (202) one or more test cases for testing the system, each of the one or more test cases comprising at least one test step;
- for each of the one or more test cases, carrying out the steps of:
- executing (102, 204) each of the at least one test step of the respective test case;
- collecting (104, 206) data generated during and/or after the execution of the at least one test step of the respective test case; and
- based on a characteristic of the respective test step:
- evaluating (108, 210) the collected data and setting a status for the at least one test step of the respective test case to passed or failed based on the collected data, or
- recording (106, 212) the collected data and setting the status for the at least one test step of the respective test case to postponed.

2. The method of claim 1, further comprising the following steps carried out by the computer hardware components:
for each of the one or more test cases, carrying out the steps of:
- for each of the at least one test step of the respective test case, if the status of the respective test step is set to postponed:
- retrieving (114) the respective recorded collected data; and
- setting the status for the respective test step to passed or failed based on the retrieved recorded collected data.

3. The method of at least one of claims 1 or 2, further comprising the following step carried out by the computer hardware components:
- setting the status for the one or more test cases to postponed if the status of one or more test steps of the one or more test cases is set to postponed.

4. The method of claim 3, further comprising the following steps carried out by the computer hardware components:
- filtering (112) the one or more test cases for which the status is set to postponed, and/or
- filtering (112) the one or more test steps of the one or more test cases for which the status is set to postponed.

5. The method of at least one of claims 1 to 4,
wherein the characteristic of the respective test step indicates an availability of a human operator to provide input for evaluating the collected data.

6. The method of claim 5,
wherein the step of evaluating (108, 210) the collected data and setting the status for the at least one respective test step to passed or failed based on the collected data is carried out if the characteristic of the respective test step indicates that the human operator is available to provide input for evaluating the collected data.

7. The method of claim 5 or 6,
wherein the step of recording (106, 212) the collected data and setting the status for the at least one respective test step to postponed is carried out if the characteristic of the respective test step indicates that the human operator is not available to provide input for evaluating the collected data.

8. The method of at least one of claims 4 to 7, further comprising the following steps carried out by the computer hardware components:
- presenting the filtered one or more test cases to a human operator for evaluation, and/or
- presenting the filtered one or more test steps to a human operator for evaluation.

9. The method of at least one of claims 1 to 8,
wherein the characteristic of the respective test step indicates a computational effort for evaluating the collected data of the at least one respective test step.

10. The method of claim 9,
wherein the step of evaluating (108, 210) the collected data and setting the status for the at least one respective test step to passed or failed based on the collected data is carried out if the characteristic of the respective test step indicates that the computational effort for evaluating the collected data of the at least one respective test step is lower than or equal to a first threshold.

11. The method of claim 9 or 10,
wherein the step of recording (106, 212) the collected data and setting the status for the at least one respective test step to postponed is carried out if the characteristic of the respective test step indicates that the computational effort for evaluating the collected data of the at least one respective test step is higher than a second threshold.

12. The method of at least one of claims 1 to 11,
wherein the collected data is a state of the system.

13. Computer system (300), comprising a plurality of computer hardware components configured to carry out steps of the computer implemented method of at least one of claims 1 to 12.

14. Test arrangement, comprising the computer system (300) of claim 13 and the system (202).

15. Non-transitory computer readable medium comprising instructions for carrying out the computer implemented method of at least one of claims 1 to 12.
